Europäisches Patentamt

**European Patent Office**

**Office européen des brevets**

(11) Numéro de publication: **0 001 372**
**B1**

(12) **FASCICULE DE BREVET EUROPEEN**

(21) Numéro de dépôt: **78420009.9**

(22) Date de dépôt: **20.09.78**

(51) Int. Cl.³: **C 07 C 85/24, C 07 C 87/60, B 01 J 23/68, B 01 J 23/84**

(54) Procédé de déshalogénation des composés aromatiques halogènes

(30) Priorité: **22.09.77 FR 7729399**

(43) Date de publication de la demande:
**04.04.79 Bulletin 79/07**

(45) Mention de la délivrance du brevet:
**01.10.80 Bulletin 80/20**

(84) Etats contractants désignés:
**BE CH DE FR GB LU NL SE**

(56) Documents cités:
**FR - A - 2 162 782
CHEMICAL ABSTRACTS, vol. 69, nr. 7,
12 août 1968, 26891r, page 2494.
Colombus, Ohio, USA
CHEMICAL ABSTRACTS, vol. 69, nr. 7,
12 août 1968, 26892s, page 2494.
Columbus, Ohio, USA**

(73) Titulaire: **RHONE-POULENC AGROCHIMIE
14 - 20, rue Pierre Baizet
F - 69009 Lyon (FR)**

(72) Inventeur: **Daumas, Jean-Claude
32, allée de Persepolis
F - 91400 Orsay (FR)
Tarolle, Robert
17, rue des Frères-Lumière
F - 94260 Fresnes (FR)
Biola, Georges
30, rue Montferrat
F - 69500 Bron (FR)**

(74) Mandataire: **Chretien, François
PHILAGRO BP 9163 - 09
F - 69263 Lyon Cédex 1 (FR)**

Courier Press, Leamington Spa, England.

## Procédé de déshalogénation des composés aromatiques halogènes

La présente invention concerne un procédé de fabrication de composés aromatiques halogénés par déshalogénation de dérivés correspondants portant un plus grand nombre d'atomes d'halogène. Elle a plus spécialement pour objet la fabrication de chloro-anilines métasubstituées, notamment la dichloro-3,5 aniline à partir d'anilines plus fortement chlorées.

On sait que la dichloro-3,5 aniline peut être obtenue d'après la demande française 2 162 782 par un procédé de déshalogénation de composés aromatiques halogénés conduisant à l'obtention préférentielle de dérivés portant un nombre inférieur d'atomes d'halogènes, dont l'un au moins est situé en position méta par rapport à un groupement fonctionnel, en phase vapeur, par action de l'hydrogène et en présence de catalyseurs en lit fixe ou fluidisé, qui est caractérisé en ce que l'on met en contact des amines aromatiques polyhalogénées avec de l'hydrogène, à une température comprise entre 280 et 420°C, en présence d'un catalyseur d'hydrogénation à action ménagée, tel qu'un sel (chlorure, oxyde, nitrate, sulfate ou chromite) de cuivre ou d'argent.

Ce procédé se caractérise par sa sélectivité améliorée en dérivés aromatiques substitués en position méta. Cependant, l'expérience montre qu'il présente l'inconvénient majeur, notamment lorsqu'on met en oeuvre les composés du cuivre sur support d'alumine, de nécessiter de fréquentes régénérations du catalyseur par suite de la formation in situ de dépôts carbonés dus à la dégradation complète d'une partie des réactifs.

La demanderesse a maintenant trouvé que ces dépôts carbonés peuvent être considérablement réduits par adjonction au métal (cuivre ou argent) constituant la phase active du catalyseur, d'un métal hydrogénant appartenant au groupe comprenant notamment le palladium, le platine, le ruthénium, le rhodium et l'iridium, quelle que soit la matière du composé (sel) de ces métaux utilisé pour préparer le catalyseur.

L'invention concerne donc un procédé de déshalogénation d'amines aromatiques di- à penta-halogénées conduisant à l'obtention préférentielle de dérivés portant un nombre inférieur d'atomes d'halogène dont l'un au moins est situé en position méta par rapport au groupement amino, en phase vapeur, par action de l'hydrogène en présence d'un catalyseur d'hydrogénation à action ménagée, à une température comprise entre 280 et 420°C, caractérisé en ce que la phase active du catalyseur contient, outre le métal catalyseur principal une quantité minoritaire d'un catalyseur auxiliaire d'hydrogénation constitué par un autre métal différent du premier.

Comme métaux hydrogénants pouvant servir de catalyseur auxiliaire, on peut citer ceux du groupe VIII du tableau périodique des éléments, de préférence ceux de numéro atomique compris entre 40 et 80, et notamment le ruthénium, le rhodium, l'iridium avec une mention spéciale pour le palladium et le platine.

Selon l'invention, on obtient un effet suffisant en utilisant une phase active catalytique contenant, outre le catalyseur principal (cuivre, argent), 0,05 à 2% en poids de ce catalyseur, du catalyseur auxiliaire. La quantité de métal constituant la phase active du catalyseur principal représente 1 à 20% en poids de l'ensemble du catalyseur.

Le catalyseur à phase active modifiée peut être préparé d'une mainière en soi connue par l'imprégnation d'un support à base d'alumine ou de silice à l'aide d'une solution d'un sel (chlorure, sulfate, chromite) ou d'un oxyde de chacun des métaux constituant la phase active du catalyseur.

Après imprégnation, le catalyseur est séché à une température comprise entre environ 110°C et 200°C.

Le support utilisable selon l'invention se présente habituellement sous la forme de grains d'alumine ou de silice, de granulométrie fine, c'est-à-dire de diamètre moyen allant d'environ 60 à 200 et, de préférence d'environ 80 à 100 microns, dans le cas des lits fluidisés ou de granulométrie plus grosse, de l'ordre de quelques millimètres, dans le cas des lits fixes. La surface spécifique des grains est généralement comprise entre environ 20 et 500 $m^2/g$ et de préférence 60 à 320 $m^2/g$.

On peut également avantageusement utiliser un support d'alumine tel que décrit ci-dessus et modifié, par incorporation d'un métal soit par imprégnation à l'aide d'un sel ou oxyde de métal alcalin, alcalino-terreux ou tel que fer, nickel, cobalt, zinc, cuivre, chrome, molybdène ou tungstène, soit par mélange d'un sel d'un métal tel que ci-dessus et d'un sel d'aluminium, mise en forme et gélification par neutralisation du composé résultant avec dispersion en fines gouttelettes sphéroïdales dans un hydrocarbure chaud. Cette incorporation est suivie d'une calcination à une température allant d'environ 500 à 1000°C. Les autres conditions générales de réalisation du procédé selon l'invention sont les suivantes:

Les matières premières sont évidemment choisies en fonction des produits finals recherchés, en ce sens que l'on part d'un composé aromatique portant un ou deux atomes d'halogène en position méta, si l'on veut fabriquer préférentiellement un produit présentant ce(s) substituant(s). La présence d'au moins un atome d'halogène en position ortho est nécessaire si l'on vise la fabrication d'amines méta et ortho substituées, bien que, suivant une caractéristique de l'invention, on puisse aussi, à volonté, éliminer totalement les substituants ortho. Le choix de la matière de départ n'a pas d'autres exigences, c'est-à-dire que l'on peut, compte-tenu de ces préalables, avoir recours aussi bien à des dérivés dont le noyau est totalement ou partiellement substitué par des atomes d'halogène. L'un des avantages du procédé réside d'ailleurs dans le fait qu'il permet de valoriser certains composés polyhalogénés, notamment polychorés, qui n'ont pas eux-mêmes une application extensive: c'est ainsi, par exemple, que certains isomères des tri- et tétrachlorobenzènes peu utilisés, et d'un faible prix de revient, peuvent être convertis en tri- et tétrachloroanilines qui permettent d'aboutir, suivant le procédé de l'invention, à un composé tel que la dichloro-3,5 aniline: celle-ci est alors fabriquée dans des conditions économiquement beaucoup plus avantageuses que lorsqu'on la prépare suivant la méthode connue jusqu'à ce jour. Un autre exemple intéressant concerne certaines dichloroanilines dont l'un des chlores est en position méta, par exemple la dichloro-3,4 aniline, et qui peuvent être converties en chloro-3 aniline. Des cas analogues de valorisation de composés aromatiques polybromés peuvent également se présenter. Enfin, il n'est pas nécessaire que le produit de départ soit pur: on peut mettre en oeuvre dans le procédé de l'invention, une charge comprenant une proportion majeure du composé choisi pour la réaction, à côté de polyhalogénoamines différemment halogénées ou même de sous-produits.

On peut également utiliser des mélanges des deux composés ou plus, destinés à la réaction.

La température est un facteur assez important et doit être maintenue dans la gamme de 280 à 420°C, si l'on veut opérer en phase gazeuse des dérivés aromatiques halogénés de départ et obtenir la sélectivité recherchée et un taux de conversion convenable sans formation sensible de produits indésirables, notamment par dégradation, cracking. A l'intérieur de ces limites, le domaine de température plus spécialement adopté est fonction de diverses variables. Tout d'abord, les catalyseurs à base d'argent requièrent généralement une gamme relativement élevée, de l'ordre de 350 à 420°C, alors que ceux à base de cuivre admettent aussi bien le domaine inférieur de température, dans les limites de l'invention. On peut aussi jouer sur ce facteur pour modifier les proportions relatives de produits finis. C'est ainsi que si l'on veut augmenter la quantité relative d'halogéno-3 et/ou dihalogéno-3,5 aniline formées, par rapport à la trihalogéno-2,3,5 aniline, il est préférable d'adopter une température un peu plus forte que si l'on ne recherche pas cet effet. Ce même décalage peut se retrouver, lorsqu'on part d'une matière première à degré d'halogénation plus ou moins grand. La réaction étant fortement exothermique, il est recommandé d'évacuer les calories afin de maintenir le milieu réactionnel à une température sensiblement constante; pour cela, on a recours aux moyens classiques tels que refroidissement à l'aide de fluides caloporteurs, ou autres. A cet égard, l'application de la technique du lit fluidisé est intéressante, car elle évite les surchauffes locales.

La quantité d'hydrogène à mettre en jeu dans le procédé de l'invention ne constitue pas un facteur déterminant et peut représenter, à volonté, la proportion stoechiométrique, par rapport au nombre d'atomes d'halogènes à éliminer, ou un faible ou large excès. La réaction se déroule facilement, est très rapide, au plus de l'ordre de quelques secondes ou même de quelques fractions de seconde, et s'accomode parfaitement de la pression atmosphérique, bien que l'application d'une pression inférieure ou supérieure ne soit évidemment pas exclue.

Suivant un trait facultatif mais particulièrement avantageux du procédé de l'invention, on prépare in situ les amines aromatiques polyhalogénées de départ en introduisant dans la zone de déshalogénation les composés aromatiques nitrés polyhalogénés servant à l'obtention desdites amines: la conversion des dérivés nitrés en anilines est très élevée, voire même quantitative. Ainsi on peut fabriquer en un seul stade les amines recherchées, relativement peu halogénées, directement à partir de composés nitrés porteurs d'un plus grand nombre d'atomes d'halogène. Un exemple d'un tel mode opératoire est, notamment, la fabrication de dichloro-3,5 aniline au départ de nitro-1 tétrachloro-2,3,4,5 benzène ou de pentachloronitrobenzène, et celle de la 3-chloroaniline à partir de 3,4-dichloroaniline ou 3,4-dichloronitrobenzène.

En pratique, un moyen commode de mettre en oeuvre le procédé selon l'invention consiste à introduire de l'hydrogène et la matière première halogénée, préalablement vaporisée, par le bas d'une zone réactionnelle contenant un lit catalytique constitué de particules de support sur lequel est déposé le catalyseur et portée à la température de réaction, qui est maintenue sensiblement constante. On peut, en réglant convenablement le débit d'introduction des gaz, maintenir le lit catalytique à l'état fluidisé. Il est avantageux d'éliminer rapidement les produits formés de la zone de déshalogénation afin d'éviter les réactions secondaires et les phénomènes de dégradation. A la sortie du réacteur, l'effluent gazeux contient le gaz halogénohydrique formé au cours de la réaction, généralement de l'hydrogène et de la matière première non transformée, et les composés aromatiques résultant de la déshalogénation, dont la proportion majeure est représentée par des dérivés porteurs d'halogènes en méta, tandis que le reste comporte divers isomères halogénés et, le cas échéant, une faible proportion de produit non halogéné et d'impuretés diverses: ces amines sont présentes au moins partiellement à l'état d'halogéno- hydrates. On traite ce mélange, en vue de la séparation de ses constituants, par application de techniques diverses. Un moyen avantageux consiste à mettre tout d'abord l'effluent gazeux issu de la réaction, au contact d'un liquide ou d'une vapeur, tel qu'un alcool aliphatique comme le méthanol, un hydrocarbure comme le benzène, ou l'eau, se trouvant à une température nettement plus basse que ledit effluent, par exemple à 100°C au moins selon le composé mis en jeu, afin de condenser rapidement les anilines et/ou leurs halogéno-hydrates. On sépare ensuite les divers composés aminés par exemple par cristallisation. Les amines peuvent être récupérées à l'état libre si nécessaire, par l'application des méthodes classiques telles que traitement à l'aide d'un composé basique comme la soude, la potasse, un carbonate alcalin, etc... On peut aussi libérer d'abord les amines, puis les séparer par cristallisation ou distillation. Si l'on utilise l'eau dans cette technique, on met en outre à profit le fait que certains halogéno-hydrates d'amines sont insolubles en milieu aqueux, alors que d'autres sont solubles. C'est ainsi, par exemple, que les chlorhydrates de tri- et tétrachloranilines sont pratiquement insolubles alors que ceux des mono et dichloranilines sont solubles. On recueille alors une solution aqueuse, dans laquelle sont dissous le gaz halogéno-hydrique et certains halogénohydrates d'anilines, et qui contient, en suspension ou sous forme de précipités, les halogéno-hydrates insolubles. Par une simple opération physique ou mécanique, telle que filtration ou centrifugation, on obtient alors une séparation entre produits solubles et insolubles. On traite ensuite séparément la phase solide et la solution comme indiqué plus haut, pour isoler les composés aminés.

Le cas échéant, l'amine de départ non transformée ou des halogénoamines issues de la réaction, mais non spécialement recherchées—par exemple les dérivés trihalogénés dans le cas d'une fabrication visant essentiellement des dérivés dihalogénés — peuvent avantageusement être recyclées en tout ou en partie, dans la zone réactionnelle, où elles sont à nouveau soumises au procédé de déshalogénation selon l'invention. Le recyclage peut être effectué soit avec les halogénohydrates, soit avec les amines libres.

Il est clair que l'on ne sort pas du cadre de l'invention en adoptant un mode de mise en oeuvre pratique du procédé, différent de celui exposé plus haut ou en effectuant le traitement de l'effluent issu de la déshalogénation par tout autre moyen que ceux qui ont été décrits ci-dessus, à titre indicatif.

Les exemples ci-après, donnés à titre non limitatif, font ressortir les performances et avantages du procédé selon la présente invention.

Dans ces exemples, les abréviations utilisées sont:

TTCNB : tétrachloronitrobenzène
TTCA : tétrachloroaniline
TCA : trichloroaniline
DCA : dichloroaniline
CA : chloroaniline
A : aniline
C : équivalent de TTCNB pyrolisé en "carbone"

### Exemple 1

On utilise un réacteur tubulaire garni de 100 g de grains de catalyseur (grosseur: 20 à 100 microns) en lit fluide.

Le catalyseur est préparé par imprégnation au drageoir d'une alumine, de surface spécifique d'environ 300 m²/g, à l'aide d'un volume de solution aqueuse représentant à peu près le volume poreux et contenant, pour 100 g de catalyseur terminé, 6 g de cuivre sous forme de chlorure cuivrique ($CuCl_2 2H_2O$) et 0,5 g, respectivement de rhodium sous forme de trichlorure de rhodium ($Rh Cl_3, 4H_2O$), d'iridium sous forme d'acide chloroiridique ($H_2IrCl_6$), de ruthénium sous forme de trichlorure de ruthénium ($RuCl_3$), de palladium sous forme de chlorure de palladium ($Pd Cl_2$) ou ($(NO_3)_2Pd$) ou de platine sous forme de chlorure platineux ($Pt Cl_4$) ou platinique ($Pt Cl_6,6H_2O$).

Un autre catalyseur avec cuivre/palladium sur alumine de 80 m²/g est également utilisé. Après imprégnation, chacun des catalyseurs est séché à une température comprise entre 150 et 180°C.

Dans le réacteur on introduit 62 g de tétrachloro-2,3,4,5 nitrobenzène vaporisé et 75 litres d'hydrogène par heure soit un rapport molaire hydrogène/tétrachlorobenzène de 14/1.

La température dans le réacteur, maintenue sensiblement constante grâce à un refroidissement par un fluide caloporteur, est de l'ordre de 310°C.

Le temps de contact du mélange gazeux avec le catalyseur est de 3 secondes et l'ensemble de la réaction dure 4 heures. Du sommet de la zone de déshalogénation, l'effluent réactionnel passe dans une colonne de lavage à l'eau. Celle-ci entraîne les anilines et l'HCl tandis que l'hydrogène excédentaire est rejeté à l'atmosphère.

On neutralise alors à la soude la masse récupérée au bas de la colonne de lavage afin de libérer la partie organique qui est analysée par chromatographie en phase vapeur et chromatographie sur couche mince.

Dans ce tableau, les rendements sont exprimés en moles% par rapport au nombre de moles de TTCNB introduites, après des séries d'essais de 4 heures. Celui en carbone (C) est exprimé en moles% de TTCNB pyrolysées sur le catalyseur, et a été obtenu à partir du dosage de carbone déposé, dont la valeur, exprimée en % du poids de catalyseur après essai, est donnée sur la dernière ligne.

A titre de comparaison, les résultats sont donnés pour une opération dans les mêmes conditions avec un catalyseur contenant seulement 6% de cuivre tel que décrit dans la demande française 2 162 782.

Le tableau (page suivante) fait clairement apparaître:

—la diminution importante, de l'ordre de 50%, des taux de carbone déposés sur le catalyseur, lorsqu'on utilise des catalyseurs mixtes selon l'invention.

—une augmentation sensible de la proportion des composés portant des atomes de chlore en position méta sur le noyau et notamment de 50% pour la 3,5-dichloroaniline et de 250 à 450% pour la 3-chloroaniline.

| Effluents | Catalyseur classique (Cu seul) | Catalyseur selon l'invention Cu + | | | | | |
|---|---|---|---|---|---|---|---|
| | | Pd (1) | + Pd (2) | + Pt (2) | + Rh (2) | + Ir (2) | + Ru (2) |
| 2, 3, 4, 5—TTCNB | 0,3 | — | — | — | < 0,05 | — | 0,05 |
| 2, 3, 4, 5—TTCA | 8,2 | 5,2 | 4,5 | 3,4 | 4,5 | 4,7 | 6,0 |
| 3, 4, 5—TCA | 1,0 | — | — | — | — | 0,5 | 0.5 |
| 2, 3, 5—TCA | 30.4 | 23,1 | 19,3 | 15,8 | 21,5 | 21,0 | 21,0 |
| 3, 5—DCA | 37,3 | 45,3 | 55,4 | 52,3 | 56,8 | 56,1 | 55,7 |
| 2, 5—DCA | 2,2 | 2,6 | 1,3 | 1,4 | 1,0 | 1,2 | 1,1 |
| 3—CA | 2,7 | 9,5 | 9,2 | 12,5 | 7,2 | 7,8 | 6,6 |
| A | | 8,7 | 0,3 | 0,4 | 0,2 | 0,3 | 0,3 |
| C | 17,1 | 5,1 | 9,6 | 13,6 | 8,5 | 8,2 | 8,5 |
| carbone sur catalyseur (%) | 8,0 | 2,6 | 4,4 | 5,6 | 4,1 | 3,9 | 4,2 |

(1) : support alumine à 80 m²/g

(2) : support alumine à 300 m²/g

### Exemple 2

On opère comme à l'exemple précédent, si ce n'est que l'on introduit dans le réacteur un égal volume de dichloro-3,4 aniline vaporisée et de l'hydrogène dans un rapport molaire $H_2$/3,4-DCA égal à environ 5. La réaction est effectuée pendant 3 heures à 320°C avec un temps de séjour de 3 secondes.

Dans ces conditions, les résulats, toujours exprimés en pourcentage molaire, sont consignés dans le tableau suivant:

| Effluent | % molaire |
|---|---|
| 3, 4 DCA | 1,4 |
| 3, 5 DCA | 0,49 |
| 3 CA | 89,32 |
| A | 8,7 |
| % de carbone sur catalyseur | 3,83 |

Ce tableau montre clairement l'intérêt du procédé qui permet une transformation quasi complète de la 3,4-dichloroaniline en 3-chloroaniline.

### Exemple 3

On opère comme à l'exemple 1, en utilisant d'une part le même catalyseur contenant comme phase active 6% de cuivre et 0,5% en poids de palladium et, en parallèle, un autre catalyseur de même phase active, mais dont le support est constitué de la même alumine (300 $m^2$/g) que précédemment si ce n'est qu'elle a été préalablement imprégnée à l'aide d'une solution aqueuse d'oxyde de chrome de façon à obtenir une teneur finale en chrome de 10%. Le support imprégné a été ensuite calciné à 950°C pendant 3 heures.

Le tableau ci-dessous indique les rendements, exprimés en pourcentage molaire par rapport au 2,3,4,5-tétrachloronitrobenzène de départ avec le catalyseur illustré à l'exemple 1 et le catalyseur à support modifié.

| Type de catalyseur | sur support non modifié | sur support modifié |
|---|---|---|
| support | Alumine 300 $m^2$/g | $Al_2O_3$ 300 $m^2$/g + $Cr_2O_3$ (10% Cr) |
| Phase active | 6 % Cu  +  0,5 % Pd | |
| 2, 3, 4, 5—TTCNB | 0,0 | 0,0 |
| 2, 3, 4, 5—TTCA | 4,0 | 9,9 |
| 3, 4, 5—TCA | | 1,0 |
| 2, 3, 4—TCA | | 0,4 |
| 2, 3, 5—TCA | 19,8 | 27,6 |
| 3, 5—DCA | 55,8 | 39,9 |
| 2, 5—DCA | 1,2 | 2,7 |
| 3—CA | 8,6 | 9,9 |
| A | 0,3 | 1,4 |
| TTCNB "pyrolisé" | 9,9 | 5,4 |
| C % sur catalyseur | 4,5 | 3,1 |

Ce tableau montre que la modification du support comme décrit ci-dessus diminue encore le taux de carbone sur le catalyseur, ce qui augmente la durée de vie d'une manière importante tout en gardant une sélectivité acceptable en dichloro-3,5 aniline.

**Revendications**

1. Procédé de déshalogénation d'amines aromatiques halogénées conduisant à l'obtention préférentielle de dérivés portant un nombre inférieur d'atomes d'halogène dont l'un au moins est situé en position méta par rapport au groupement amino, en phase vapeur, par action de l'hydrogène en présence d'un catalyseur métallique d'hydrogénation à action ménagée choisi dans le groupe comprenant le cuivre et l'argent, à une température comprise entre 280 et 420°C, caractérisé en ce que la phase active du catalyseur contient, outre le métal catalyseur principal une quantité minoritaire d'un catalyseur auxiliaire d'hydrogénation constitué par un autre métal différent du premier.

2. Procédé selon la revendication 1, caractérisé en ce que le catalyseur auxiliaire est un métal choisi dans le groupe VIII du tableau périodique des éléments.

3. Procédé selon la revendication 2), characterisé en ce que le catalyseur auxiliaire est un métal choisi dans le groupe comprenant le ruthénium, le rhodium et le palladium.

4. Procédé selon la revendication 2), caractérisé en ce que le catalyseur auxiliaire est un métal choisi dans le groupe comprenant l'iridium et la platine.

5. Procédé selon l'une des revendications 1 à 4 caractérisé en ce que la quantité de métal du catalyseur auxiliaire représente environ 0,01 à 2% en poids de l'ensemble du catalyseur.

6. Procédé selon l'une des revendications 1 à 5, caractérisé en ce que la quantité totale de métal apportée sur le support représente de 1 à 20% en poids du support.

7. Procédé selon l'une des revendications 1 à 6, caractérisé en ce que le support est une alumine.

8. Procédé selon la revendication 7, caractérisé en ce que le support est une alumine modifiée par incorporation d'un métal suivie d'une calcination à une température de 500 à 1000°C.

9. Procédé selon la revendication 8, caractérisé en ce que l'incorporation du métal est effectuée par imprégnation de l'alumine à l'aide d'un sel ou oxyde de ce métal.

10. Procédé selon la revendication 9, caractérisé en ce que l'incorporation du métal est effectuée par mélange d'un sel d'aluminium et d'un sel métallique, mise en forme, gélification par neutralisation du composé résultant avec dispersion en fines gouttelettes sphéroidales dans un hydrocarbure chaud.

11. Procédé selon l'une des revendications 1 à 6, caractérisé en ce que le support est une silice.

12. Procédé selon l'une des revendications 1 à 11, caractérisé en ce que l'amine de départ est di-, tri- ou tétrahalogénée sur un noyau phényl.

13. Procédé selon la revendication 12, caractérisé en ce que les atomes d'halogènes sont des atomes de chlore.

14. Procédé selon les revendications 1 à 13, caractérisé en ce que l'on prépare in situ les amines aromatiques polyhalogénées de départ en introduisant dans la zone de déshalogénation les composés aromatiques nitrés polyhalogénés servant à l'obtention desdites amines.

**Claims**

1. Process for the dehalogenation of halogen-containing aromatic amines, which leads to the preferential production of derivatives carrying a smaller number of halogen atoms, at least one of which is located in the meta position, relative to the amino group, in the vapour phase, by the action of hydrogen in the presence of a controlled-action hydrogenation catalyst, selected from the group comprising copper and silver, at a temperature of between 280 and 420°, characterised in that the active phase of the catalyst contains, in addition to the main catalyst metal, a minor amount of an auxiliary hydrogenation catalyst consisting of another metal which is different from the first.

2. Process according to Claim 1, characterised in that the auxiliary catalyst is a metal chosen from group VIII of the periodic table of the elements.

3. Process according to Claim 2, characterised in that the auxiliary catalyst is a metal chosen from the group comprising ruthenium, rhodium and palladium.

4. Process according to Claim 2, characterised in that the auxiliary catalyst is a metal chosen from the group comprising iridium and platinum.

5. Process according to one of Claims 1 to 4, characterised in that the amount of metal in the auxiliary catalyst represents about 0.01 to 2% by weight of the whole catalyst.

6. Process according to one of Claims 1 to 5, characterised in that the total amount of metal carried on the support represents from 1 to 20% by weight of the support.

7. Process according to one of Claims 1 to 6, characterised in that the support is an alumina.

8. Process according to Claim 7, characterised in that the support is an alumina which has been modified by the incorporation of a metal, followed by a calcination at a temperature of 500 to 1,000°C.

9. Process according to Claim 8, characterised in that the metal is incorporated by impregnating the alumina using a salt or oxide of this metal.

10. Process according to Claim 9, characterised in that the metal is incorporated by mixing an aluminium salt with a metal salt, shaping the mixture, gelling it by neutralising the resulting compound and dispersing it as fine spherical droplets in a hot hydrocarbon.

11. Process according to one of Claims 1 to 6, characterised in that the support is a silica.

12. A process according to one of Claims 1 to 11, characterised in that the initial amine contains two, three or four halogen atoms on phenyl nucleus.

13. Process according to Claim 12, characterised in that the halogen atoms are chlorine atoms.

14. Process according to Claims 1 to 13, characterised in that the initial aromatic amines, containing several halogen atoms, are prepared in situ by introducing, into the dehalogenation zone, the aromatic nitro compounds, containing several halogen atoms, which are used to obtain the said amines.

## Patentansprüche

1. Verfahren zur Enthalogenierung von halogenierten aromatischen Aminen unter vorzugsweiser Erzielung von Derivaten mit einer geringeren Halogenatomanzahl, wovon wenigstens eines in Metastellung in Bezug auf die Aminogruppe steht, in der Dampfphase, durch Einwirkung von Wasserstoff in Gegenwart eines metallischen Hydrierungskatalysors mit schonender Wirkung, der ans der Gruppe bestehend aus Kupfer und Silber ausgewählt ist, bei einer Temperatur zwischen 280 und 420°C, dadurch gekennzeichnet, daß die aktive Phase des Katalysators außer dem Metall des Hauptkatalysators eine geringe Menge eines Hydrierungshilfskatalysators enthält, der aus einem anderen, von dem erstgenannten verschiedenen Metall besteht.

2. Verfahren gemäß Anspruch 1, dadurch gekennzeichnet, daß der Hilfskatalysator ein Metall ausgewählt aus der VIII. Gruppe des periodischen Systems der Elemente ist.

3. Verfahren gemäß Anspruch 2, dadurch gekennzeichnet, daß der Hilfskatalysator ein Metall ausgewählt aus der Gruppe umfassend Ruthenium, Rhodium und Palladium ist.

4. Verfahren gemäß Anspruch 2, dadurch gekennzeichnet, daß der Hilfskatalysator ein Metall ausgewählt aus der Gruppe umfassend Iridium und Platin ist.

5. Verfahren gemäß einem der Ansprüche 1 bis 4, dadurch gekennzeichnet, daß die Metallmenge des Hilfskatalysators etwa 0,01 bis 2 Gewichts-% der Gesamtheit des Katalysators beträgt.

6. Verfahren gemäß einem der Ansprüche 1 bis 5, dadurch gekennzeichnet, gaß die Gesamtmenge Metall, die auf dem Träger aufgebracht ist, 1 bis 20 Gewichts-% des Trägers darstellt.

7. Verfahren gemäß einem der Ansprüche 1 bis 6, dadurch gekennzeichnet, daß der Träger ein Aluminiumoxid ist.

8. Verfahren gemäß Anspruch 7, dadurch gekennzeichnet, daß der Träger ein Aluminiumoxid ist, das durch Einverleibung eines Metalls und anschließende Kalzinierung auf eine Temperatur von 500 bis 1000°C modifiziert wurde.

9. Verfahren gemäß Anspruch 8, dadurch gekennzeichnet, daß die Einverleibung des Metalls durch Imprägnierung des Aluminiumoxids mittels eines Salzes oder Oxids dieses Metalls bewirkt wird.

10. Verfahren gemäß Anspruch 9, dadurch gekennzeichnet, daß die Einverleibung des Metalls bewirkt wird durch Vermischen eines Aluminiumsalzes mit einem Metallsalz, Formgebung, Gelierung durch Neutralisation der entstehenden Verbindung mit Dispersion zu feinen sphäroidalen Tröpfchen in einem heißen Kohlenwasserstoff.

11. Verfahren gemäß einem der Ansprüche 1 bis 6, dadurch gekennzeichnet, daß Träger ein Siliciumdioxid ist.

12. Verfahren gemäß einem der Ansprüche 1 bis 11, dadurch gekennzeichnet, daß das Ausgangsamin an einem Phenylring di-, tri- oder tetrahalogeniert ist.

13. Verfahren gemäß Anspruch 12, dadurch gekennzeichnet, daß die Halogenatome Chloratome sind.

14. Verfahren gemäß den Ansprüchen 1 bis 13, dadurch gekennzeichnet, daß man die polyhalogenierten aromatischen Ausgangsamine in situ herstellt, indem man in die Enthalogenierungszone die polyhalogenierten nitrierten aromatischen Verbindungen, welche zur Erzielung dieser Amine dienen, einführt.